# EUROPEAN PATENT APPLICATION

(11) **EP 2 163 752 A1**
(43) Date of publication of application: **17.03.2010**
(21) Application number: 09425328.3
(22) Date of filing: 21.08.2009
(51) Int. Cl.: F02D 41/22, F02M 65/00, G01M 15/05, G01M 19/02

(54) **Diagnostic all-purpose tool for petrol / diesel / gpl / methane engine**

(30) Priority: 11.09.2008 IT BI20080017
(71) Applicant: Derossi Massimo S.r.l., 13856 Vigliano Biellese (BI) (IT)
(72) Inventor: Derossi Massimo S.r.l., 13856 Vigliano Biellese (BI) (IT)
(74) Representative: Lotti, Giorgio

(57) **Abstract**

The present invention concerns a diagnostic all-purpose tool for petrol / diesel / gpl / methane motor that can be used to test the input for components such as common rail electro-injectors, piezo-electric electro-injectors, petrol/gpl electro-injectors, flow and pressure regulator valves, coils, egr valves, ecc... through the use of an inductive probe (2) to approach to the component in question having resulted as in positive case an acoustic signaling (buzzer) and a bright signaling (led) of the signal of command to the component in object

## Description

The present invention concerns a diagnostic all-purpose tool for petrol / diesel / gpl / methane motor.

More in detail the invention pertains to a tool that allows to verify the operation of the system of lighting and injection of a motor, overcoming the limits of the communes systems of self-diagnosis installed on the automobiles or applicable to them.

New technologies have radically modified the operation and the control of the motors.

The developement asks for to the repairman of auto certainties when he must replace a component.

Today the systems of lighting and injection are more and more composed by components that work in duty cycle creating problems to the operator that must establish the operation of the same.

On the base than said above the modem garages, to keep competitive, must operate in brief times, besides certain tests of operation of some components can be performed only with the aid of oscilloscopes which are not always to disposition of the operators. The oscilloscopes are of difficulty use both to practical level
(interfaces not always available, difficulty to connect to the component in object, at times it is necessary to perforate the cables or to detach the wirings with the possibility of interpretation of errors from the ECU memory ) and to operational level (scarce knowledge in the use of the same from the operators that often they are mechanics and not elettrotecnicis ).

This product allows to annul the gaps from the operators and to help them to effect a certain and rapids diagnosis without being invaded you to electronic level.

The lighting and the feeding are the most delicate points for the motors and therefore more frequently object of reparations.

The purpose of this invention is that to introduce a simple and very effective product that gives the operator the opportunity to individualize if the components in examination are fed by the central unity, interrupted or in short-circuit.

This tool, in testing the electromechanical electronic components of a box controlled motor, allows to establish that:
1) the box is fed and performs its control function.
2) the wiring from the box to a component is in good working order.
3) the component in question is not interrupped.
4) the component in question is not in short-circuit towards negative.
5) the component in question is not in short-circuit towards positive.
6) the component in question is functioning electrically.

For example, in a diesel motor with COMMON RAIL system could present the situation in which the car doesn't depart because of injectors hydraulically nailed by a bad fuel; in this case with MM100 I can establish that the electronic part of the system is efficient because MM100 will signal the correct power supply of the injectors and the flow regulator, accordingly I can establish the efficiency of the RPM sensor and of the feeding of the box since, in absence of these parameters, the same one would not be able to pilot nothing.

On the base of the indications furnished by MM100 the operator can address his attention on the hydraulic part (feeding fuel ) excluding the part of command electronics (this means to exclude big part of the investigated components).

In an opposite case we could have the injectors not commanded by the central unity (since spoiled or not fed), in this situation MM 100 will allow me to establish that the problem doesn't concern the hydraulic part ( low pressure pump / high pressure pump /leaks / air aspirations ) since if I don't have the pilotage of the injectors given by the ECU I cannot have the opening of the same and the relative starting.

To be able to establish with certainty what components of a motor are or aren't fed, gives the operator a great diagnostic possibility to individualize what indeed creates the problem, demolishing costs of manpower and exchanges.

On a system of lighting / feeding of a lighting commanded motor we can test with MM100: coils, regulator valves, injectors; instead on a system of feeding of a common rail diesel motor : electro-injectors, flow regulator valves, pressure regulator valves, EGR valves, ecc...

All the controls of the single details are effected without using interfaces, to detach component, to perforate cables or make other difficult operational procedures, or that can induce the control box to record as a defect these operations.

The components are checked with MM100 through an inductive probe that is approached to the component in question.

The magnetic field produced by the feeding received by the component in question is noticed by the inductive probe and elaborated by the electronic card that turns it into an acoustic ( through a buzzer ) and bright signaling ( through a led ).

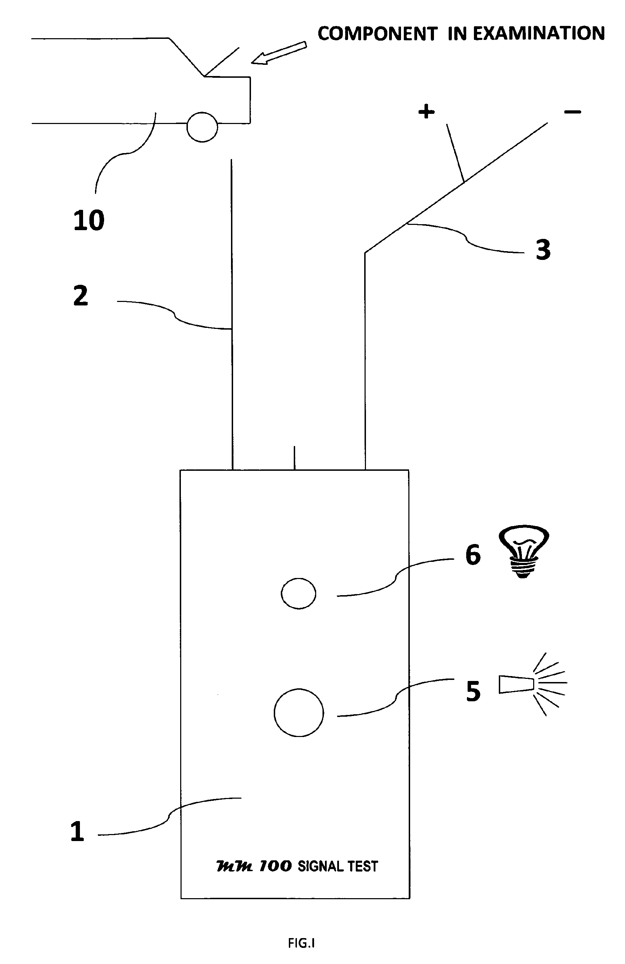

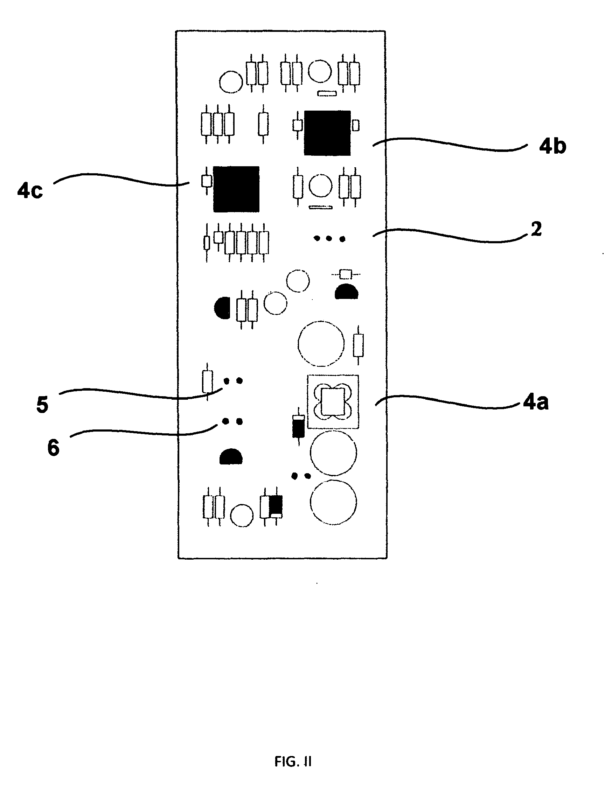

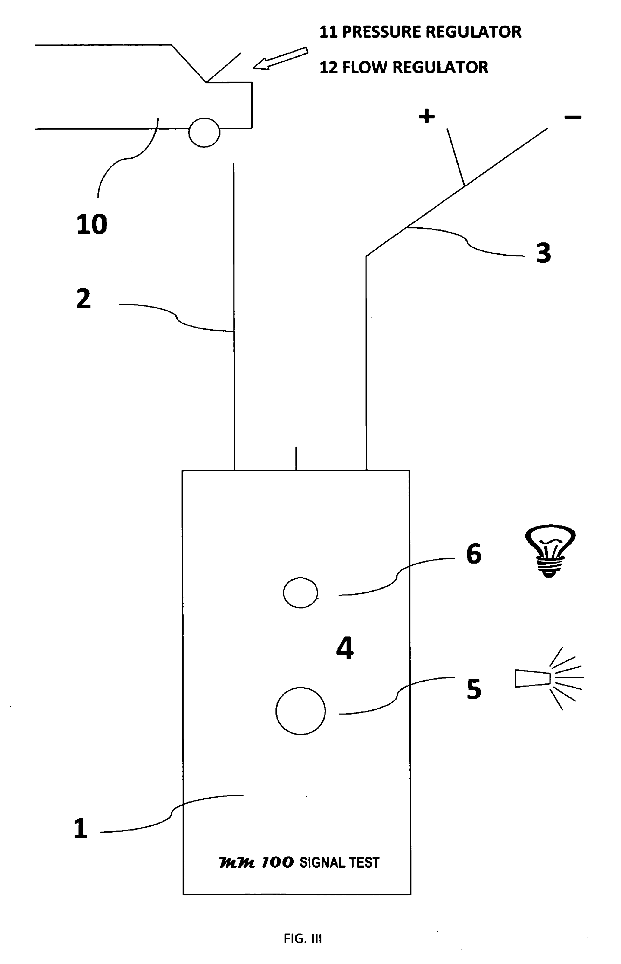

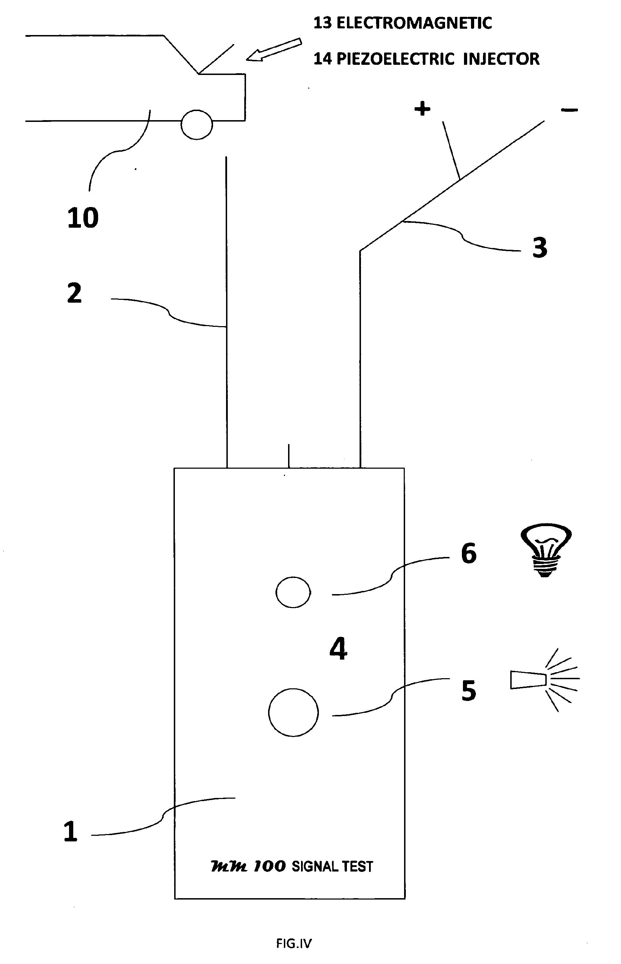

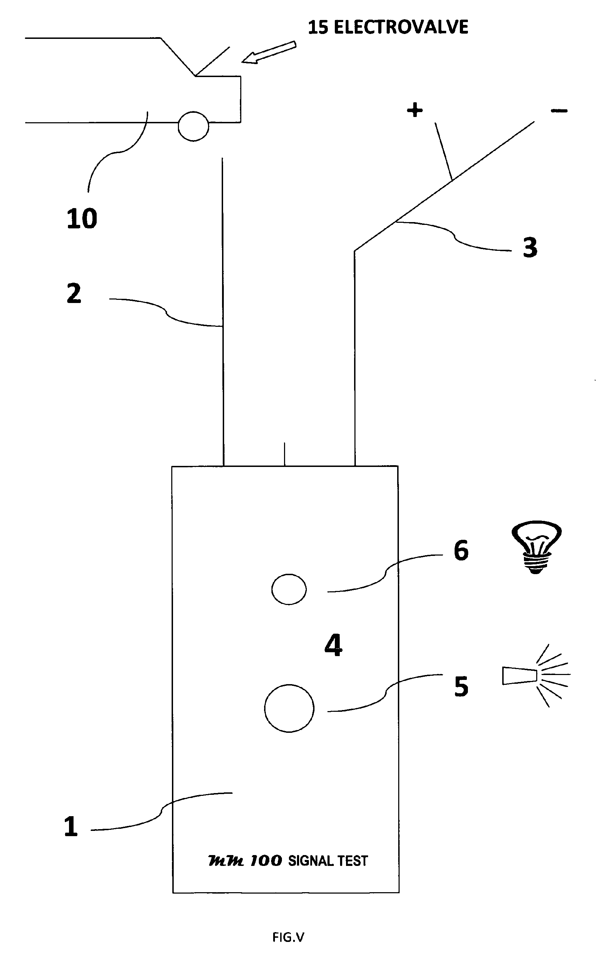

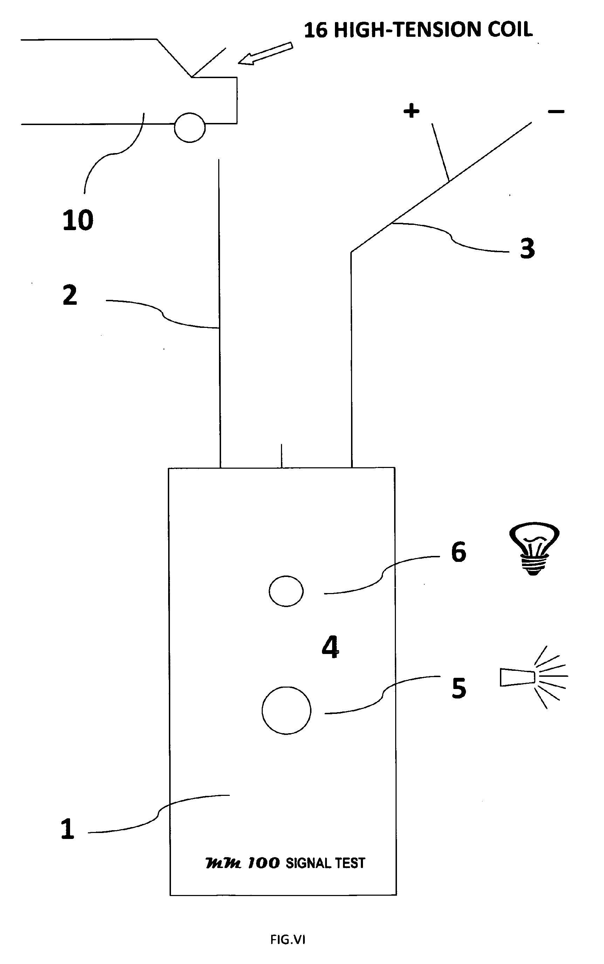

## Claims

1. Multifunction diagnostic tool for engines (petrol / diesel/gpl/methan) including a central unit (1) supplied with elaboration and control instruments and survey instruments (2 probe) between user and the said elaboration and control instruments and feeding instruments (3 feed cable), through which the said central unit (1) is connectable to a 12V battery; the said elaboration and control instruments allow operator to make function test on one or more electronic/electromechanic components, considering, in autonomous way, the components in examination, gauging magnetic field generated and, subsequently, comparing results obtained by the said tests and measurements, giving as result an acoustic-luminous signalling (buzzer 5/led 6) to survey singly the correct working of the said components.

2. Tool (1), according to the claim 1, **characterized by** the fact that the said survey instruments include an inductive probe (2).

3. Tool (1), according to the claim 1, **characterized by** the fact that an electric cable (3) connects the said central unit to the feed battery of the car, diagnosis object.

4. Tool (1), according to any previous claims, **characterized by** the fact that the said elaboration and control instruments, include a feeder (4a).

5. Tool (1), according to any previous claims, **characterized by** the fact that the said elaboration and control instruments, include an amplifier (4b).

6. Tool (1), according to any previous claims, **characterized by** the fact that the said elaboration and control instruments, include a comparer (4c).

7. Tool (1), according to any previous claims, **characterized by** the fact that the said elaboration and control instruments, include a sound generator (5) .

8. Tool (1), according to any previous claims, **characterized by** the fact that the said elaboration and control instruments, include a luminous led signalling (6).

9. Tool (1), according to any previous claims, **characterized by** the fact that the said components of the said engine (10) include a pressure regulator (11) or flow regulator (12).

10. Tool (1), according to any previous claims, **characterized by** the fact that the said components of the said engine (10) include an electromagnetic (13) or piezoelectric injector (14).

11. Tool (1), according to any previous claims, **characterized by** the fact that the said components of the said engine (10) include an electrovalve (15).

12. Tool (1), according to any previous claims, **characterized by** the fact that the said components of the said engine (10) include an high - tension coil (16).
